# EUROPEAN PATENT APPLICATION

(11) **EP 2 602 922 A2**
(43) Date of publication of application: **12.06.2013**
(21) Application number: 12195782.3
(22) Date of filing: 06.12.2012
(51) Int. Cl.: H02M 1/32, H02M 3/00

(54) **Power management system for Universal Serial Bus**

(30) Priority: 08.12.2011 US 201161568596 P; 15.11.2012 US 201213678007
(71) Applicant: O2 Micro, Inc., Santa Clara, CA 95054 (US)
(72) Inventor: Popescu-Stanesti, Vlad Mihail Dan, San Jose, CA California 95129 (US); Kobildjanov, Oleg, San Jose, CA California 95130 (US); Patru, Claudiu, 061181 Bucharest (RO); Roman, Andrei-George, 062076 Bucharest (RO)
(74) Representative: Lippert, Stachow & Partner

(57) **Abstract**

A power management system (20) adjusts a first output voltage (201) delivered to a load (19) and adjusts a second output voltage (202) delivered to a battery (18). The power management system includes an error amplifier (223) for comparing the first output voltage (201) with a first voltage reference (V_{RBUS_min}) indicative of an operating voltage of the load and for accordingly generating a first error signal (226). The power management system further includes a DC/DC converter (230) for adjusting the first output voltage and the second output voltage by adjusting a duty cycle of the DC/DC converter (230) and an error generator (227) for controlling the duty cycle based on the first error signal (226). If the first output voltage is lower than the first voltage reference, the error generator reduces the duty cycle and a charging current of the battery (18)based on the first error signal.

## Description

### RELATED APPLICATIONS

The present application claims priority to the U.S. provisional application, Serial No. 61/568,596, titled "Power Management System," filed on December 8, 2011, which is hereby incorporated by reference in its entirety.

### BACKGROUND

Universal Serial Bus (USB) ports are provided in most presently manufactured portable electronic systems and are used to provide power to an active system and to a rechargeable battery simultaneously. The portable electronic system includes a power management system, which controls the input current from the USB port to the active system and the rechargeable battery so as to prevent an over-voltage condition of the USB port. One conventional solution is to use a single stage current control loop formed by an error amplifier and a current control circuit to clamp the input current. However, due to the large current limit margin of the single stage current control loop, the power utilization is low. Furthermore, in some cases, the USB port may not have sufficient power to charge both the active system and the rechargeable battery. As a result, the active system may not operate properly while the rechargeable battery is charged. Another conventional solution is to compare a power threshold signal with a total source current including currents delivered to the active system and to the rechargeable battery. However, this solution requires more components (for example, sensing resistors for detecting the total source current) so that the cost of the power management system is increased. Besides, the comparison result using the total source current may not accurately indicate when the active system requires more power so that the balance between the active system and the rechargeable battery is not well controlled.

### SUMMARY

Accordingly, embodiments according to the present invention solve the aforementioned drawbacks by providing a power management system that includes feedback control of both the input current and the power delivered to the active system and/or the battery.

In one example, a power management system is provided. The power management system adjusts a first output voltage delivered to a load and adjusts a second output voltage delivered to a battery. The power management system includes: an error amplifier, operable for comparing the first output voltage with a first voltage reference indicative of an operating voltage of the load and for accordingly generating a first error signal; a DC/DC converter, coupled to the battery, that is operable for adjusting the first output voltage and the second output voltage by adjusting a duty cycle of the DC/DC converter; and an error generator, coupled between the error amplifier and the DC/DC converter, that is operable for controlling the duty cycle of the DC/DC converter based on the first error signal, wherein if the first output voltage is lower than the first voltage reference, the error generator reduces the duty cycle of the DC/DC converter and a charging current of the battery based on the first error signal so that the first output voltage increases to the first voltage reference.

In another example, a power management method is provided. The power management method adjusts a first output voltage delivered to a load and adjusts a second output voltage delivered to a battery. The method includes: comparing the first output voltage with a first voltage reference indicative of an operating voltage of the load and accordingly generating a first error signal; controlling a duty cycle of a DC/DC converter based on the first error signal; and adjusting the first output voltage and the second output voltage by adjusting a duty cycle of the DC/DC converter, wherein if the first output voltage is lower than the first voltage reference, the duty cycle of the DC/DC converter and a charging current of the battery are reduced based on the first error signal so that the first output voltage increases to the first voltage reference.

### BRIEF DESCRIPTION OF THE DRAWINGS

The embodiments will be more readily understood in view of the following description when accompanied by the below figures and wherein like reference numerals represent like elements, wherein:

FIG. 1 is a block diagram illustrating a power management system, in an embodiment according to the present disclosure;

FIG. 2 is a detailed circuit diagram illustrating an example of a power management system, in an embodiment according to the present disclosure;

FIG. 3 is a detailed circuit diagram illustrating another example of a power management system, in an embodiment according to the present disclosure;

FIG. 4 is a block diagram illustrating another example of an input current limit control circuit in an embodiment according to the present disclosure;

FIG. 5 is a block diagram illustrating yet another example of an input current limit control circuit in an embodiment according to the present disclosure;

FIG. 6 is a block diagram illustrating an example of an error generator in an embodiment according to the present disclosure;

FIG. 7 is a flow chart illustrating an example of a method for controlling system priority in an embodiment according to the present disclosure;

FIG. 8 is a flow chart illustrating an example of a method for controlling input current in an embodiment according to the present disclosure; and

FIG. 9 is a flow chart illustrating an example of a method for controlling battery voltage in an embodiment according to the present disclosure.

### DETAILED DESCRIPTION

Reference will now be made in detail to the embodiments of the present disclosure, examples of which are illustrated in the accompanying drawings. While the present disclosure will be described in conjunction with the embodiments, it will be understood that they are not intended to limit the present disclosure to these embodiments. On the contrary, the present disclosure is intended to cover alternatives, modifications, and equivalents, which may be included within the spirit and scope of the present disclosure as defined by the appended claims.

Furthermore, in the following detailed description of embodiments of the present disclosure, numerous specific details are set forth in order to provide a thorough understanding of the present disclosure. However, it will be recognized by one of ordinary skill in the art that the present disclosure may be practiced without these specific details. In other instances, well-known methods, procedures, components, and circuits have not been described in detail as not to unnecessarily obscure aspects of the embodiments of the present disclosure.

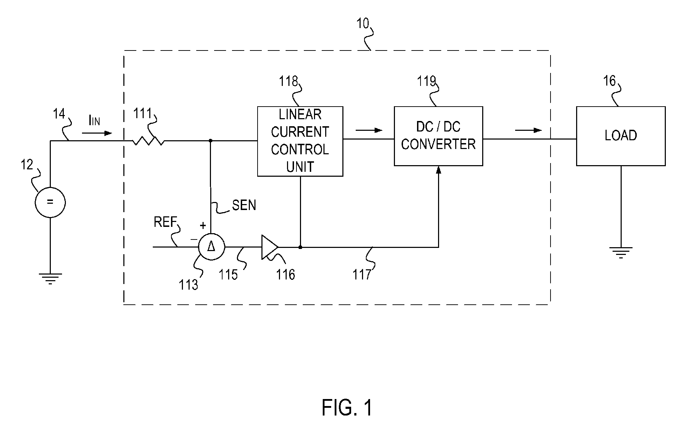

FIG. 1 is a block diagram illustrating a power management system 10, in an embodiment according to the present disclosure. The power management system 10 receives power from a power supply 12 and powers a load 16. The power supply 12 can take various forms, such as a Universal Serial Bus (USB) port power supply. A current I_{IN} flows from the power supply 12, through an input line 14, to the power management system 10. The power management system 10 includes a current sensor 111, a subtractor 113, an error amplifier 116, a current control unit, e.g., a linear current control unit 118, and a power converter, e.g., a switching mode DC/DC converter 119. The current sensor 111 is coupled to the input line 14 for sensing the input current I_{IN} and generates a sensing signal SEN indicative of the magnitude of the current I_{IN}. The subtractor 113 is coupled to the current sensor 111 for subtracting a current reference signal REF indicative of a predetermined current limit I_{LIM} from the sensing signal SEN and accordingly generating an error signal 115. The error amplifier 116 is coupled to the subtractor 113 for amplifying the error signal 115 and outputting an amplified error signal 117. As shown in FIG. 1, the subtractor 113, the error amplifier 116, the linear current control unit 118, and the switching mode DC/DC converter 119 together form a dual stage current control loop. By using the dual stage current control loop, both the linear current control unit 118 and the switching mode DC/DC converter 119 can be controlled by the amplified error signal 117. More specifically, based on the amplified error signal 117, the linear current control unit 118 clamps the input current I_{IN} and the switching mode DC/DC converter 119 adjusts its output voltage to power the load 16 properly.

Advantageously, the power management system 10 employs a dual stage current control loop, rather than a conventional single stage current control loop, to clamp the input current I_{IN} and to adjust the output voltage. By using a dual stage current control loop, the power management system 10 has an improved transient response and accuracy compared to each current loop acting separately.

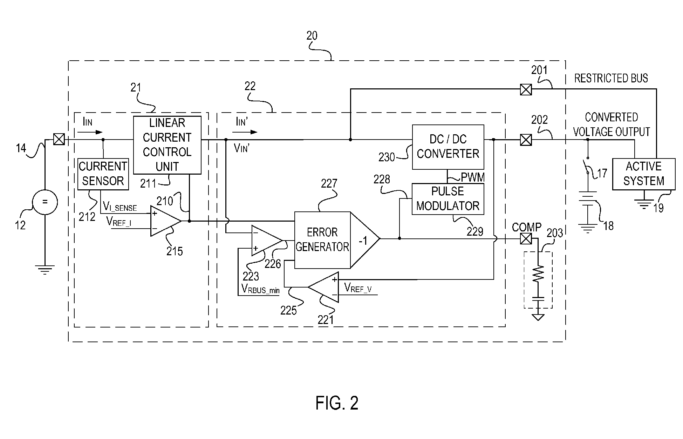

FIG. 2 is a detailed circuit diagram illustrating an example of a power management system 20, in an embodiment according to the present disclosure. FIG. 2 is described in combination with FIG. 1. Elements labeled the same as in FIG. 1 have similar functions.

The power management system 20 includes an input current limit control circuit 21 and a power converter 22. The input current limit control circuit 21 is coupled to the power supply 12, and is operable for sensing the input current I_{IN}, generating an error signal 210 indicative of the difference between the input current I_{IN} and a predetermined current limit I_{LIM}, and selectively clamping the input current I_{IN} to a clamped current I_{IN}' based on the error signal 210. The input current limit control circuit 21 prevents an over-current condition of the input line 14 (e.g., a voltage bus (VBUS) power line of a USB upstream port). The power converter 22 is coupled to the input current limit control circuit 21, and is operable for receiving the clamped current I_{IN}' and the error signal 210, adjusting a first output voltage delivered to a load, e.g., an active system 19, and adjusting a second output voltage delivered to a battery 18 based on the error signal 210. Although the battery 18 in FIG. 2 is coupled to the power converter 22 via a switch 17, the battery 18 can be directly connected to the power converter 22 in an alternative embodiment.

In the example of FIG. 2, the input current limit control circuit 21 includes a current sensor 212, an error amplifier 215, and a linear current control unit 211. The current sensor 212 is coupled to the input line 14 for sensing the input current I_{IN} and generating a sensing signal V_{I_SENSE} indicative of the input current I_{IN}. The error amplifier 215 is coupled to the current sensor 212 for comparing the sensing signal V_{I_SENSE} with a voltage reference V_{REF_I} indicative of the predetermined current limit I_{LIM} and accordingly generating the error signal 210. The voltage reference V_{REF_I} can be preset by a controller (not shown) according to different application requirements. The error amplifier 215 operates similarly to the error amplifier 116 in FIG. 1. The current sensor 212, the error amplifier 215, the linear current control unit 211, and the power converter 22 together form a dual stage current control loop. By using the dual stage current control loop, both the linear current control unit 211 and the power converter 22 can be controlled by the error signal 210.

The linear current control unit 211 is coupled to the error amplifier 215 for receiving the error signal 210 and is also coupled to the input line 14 for receiving the current I_{IN}. The linear current control unit 211 selectively clamps the input current I_{IN} to a clamped current I_{IN}' based on the error signal 210. More specifically, the input current I_{IN} is clamped to the current limit I_{LIM} determined by the voltage reference V_{REF_I} (e.g., the clamped current I_{IN}' is equal to the current limit I_{LIM}) if the input current I_{IN} exceeds the current limit I_{LIM}. Switches (not shown) of the linear current control unit 211 are all turned on if the input current I_{IN} does not exceed the current limit I_{LIM} so that the input current I_{IN} is transmitted to the power converter 22 without being clamped (e.g., the current I_{IN}' is equal to the input current I_{IN}). In general, the error signal 210 is zero (e.g., I_{IN} = I_{IN}' = I_{LIM}) when the power management system 20 is operating in a normal working condition. If there is an over-current condition (i.e., the input current I_{IN} exceeds the current limit I_{LIM}), the error signal 210 becomes positive.

The power converter 22 is coupled to the linear current control unit 211 for receiving the current I_{IN}' and is also coupled to the error amplifier 215 for receiving the error signal 210. The power converter 22 includes an error amplifier 221, an error amplifier 223, an error generator 227, a pulse modulator 229, and a DC/DC converter 230. The DC/DC converter can be a buck converter or another controllable power supply known in the art, including, for example, boost, buck-boost, and other circuit topologies. In the example of FIG. 2, the DC/DC converter 230 is a buck converter, and the duty cycle of the DC/DC converter 230 is controlled by the pulse modulator 229 through at least three feedback loops: (1) a battery voltage control loop built around the error amplifier 221; (2) a system priority control loop built around the error amplifier 223; and (3) a dual stage current control loop built around the error amplifier 215.

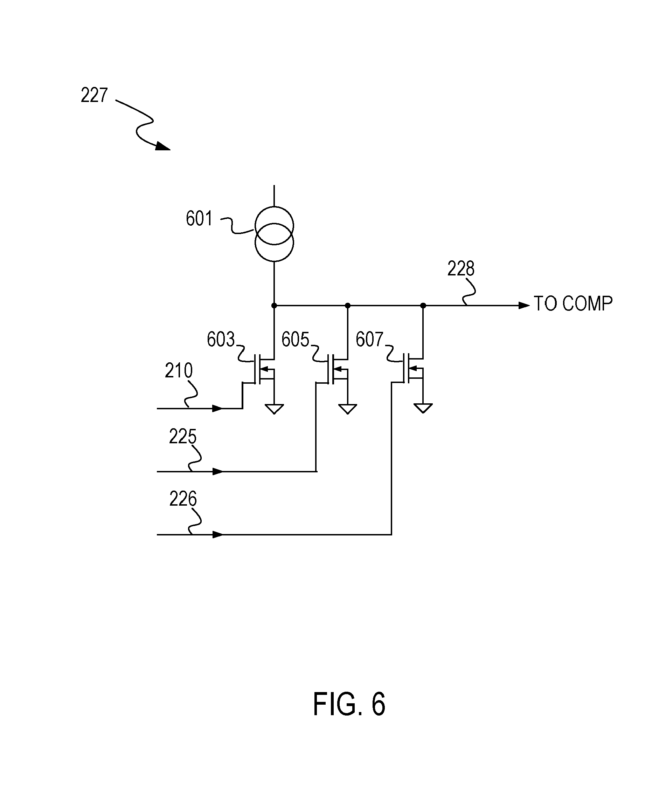

For the battery voltage control loop, the error amplifier 221 compares a voltage at a converted voltage output 202 of the DC/DC converter 230 with a voltage reference V_{REF_V} and accordingly generates an error signal 225. In the example of FIG. 2, the voltage reference V_{REF_V} is equal to a maximum charging voltage that is allowed to be delivered to the battery 18. More specifically, if the power management system 20 is operating in a normal working condition, then the error signal 225 is zero (e.g., the voltage at the converted voltage output 202 is equal to the voltage reference V_{REF_V}). In this case, the converted voltage output 202 charges the battery 18 with a constant maximum charging voltage (e.g., the voltage reference V_{REF_V}). If there is an over-voltage condition (e.g., the converted voltage output 202 exceeds the voltage reference V_{REF_V}), then the error signal 225 becomes positive. In turn, this operates to decrease the voltage on a compensation terminal COMP (FIG. 6 provides a detailed description of this operation), thereby decreasing the duty cycle of the DC/DC converter 230. Accordingly, the converted voltage output 202 drops to the voltage reference V_{REF_V} so as to charge the battery 18 in the constant voltage charging mode.

For the system priority control loop, the error amplifier 223 compares a voltage V_{IN}' at a restricted bus 201 with a voltage reference V_{RBUS_min} and accordingly generates an error signal 226. In the example of FIG. 2, the voltage reference V_{RBUS_min} is equal to a minimum system voltage that is needed for the active system 19 to operate normally. More specifically, if the power management system 20 is operating in a normal working condition, then the error signal 226 is zero (e.g., the voltage V_{IN}' at the restricted bus 201 is equal to the voltage reference V_{RBUS_min}). If there is an under-voltage condition (e.g., the voltage V_{IN}' at the restricted bus 201 is lower than the voltage reference V_{RBUS_min}), the error signal 226 becomes positive. In turn, this operates to decrease the voltage on the terminal COMP (FIG. 6 provides a detailed description of this operation), thereby decreasing the duty cycle of the DC/DC converter 230. Accordingly, the power converter 22 reduces or cuts off the charging current of the battery 18 based on the error signal 226. Since the total amount of power provided by the power supply 12 is fixed, power delivered to the battery 18 and the active system 19 is balanced. Due to the charging current reduction of the battery 18, the voltage V_{IN}' delivered to the active system 19 increases to the voltage reference V_{RBUS_min} so as to supply power to the active system 19 properly.

Therefore, by using the system priority control loop, the active system 19 has priority to ensure its normal operation. If the active system 19 requires more power, the charging current of the battery 18 is accordingly reduced to meet the demands of the active system 19. If necessary, the battery 18 can stop the charging operation and start to supply power to the active system 19. In this case, the active system 19 can be powered by both the battery 18 and the restricted bus 201.

In some instances, the battery 18 supplies the voltage reference V_{REF_V} indicative of its maximum charging voltage, which could be in digital form. Thus, a digital-to-analog (D/A) converter (not shown) coupled to the error amplifier 221 are provided to convert V_{REF_V} into an analog signal for comparison at the error amplifier 221, as described above. Similarly, the active system 19 supplies the voltage reference V_{RBUS_min} indicative of its minimum system voltage, which could be in digital form. Thus, a D/A converter (not shown) coupled to the error amplifier 223 is provided to convert V_{RBUS_min} into an analog signal for comparison at the error amplifier 223, as described above. Alternatively, V_{REF_V} and V_{RBUS_min} can be generated by other programmable circuitries (not shown), as is known in the art.

For the dual stage current control loop, as described above, the error amplifier 215 compares the sensing signal V_{I_SENSE} with the voltage reference V_{REF_I} indicative of the predetermined current limit I_{LIM} and accordingly generates the error signal 210. If there is an over-current condition (e.g., the input current I_{IN} exceeds the current limit I_{LIM}), the error signal 210 becomes positive. In turn, this operates to decrease the voltage on the terminal COMP (FIG. 6 provides a detailed description of this operation), thereby decreasing the duty cycle of the DC/DC converter 230 based on the error signal 210 so as to keep the converted voltage output 202 constant. As a result, the converted voltage output 202 remains constant even though the input current I_{IN} varies.

In the example of FIG. 2, the error generator 227 receives the error signal 210, the error signal 225, and the error signal 226 and outputs an output signal 228 to the pulse modulator 229. More specifically, as mentioned above, if the power management system 20 is operating in a normal working condition, the error signals 210, 225, and 226 should be zero. However, if there is an over-current condition, an over-voltage condition or an under-voltage condition, one of the error signals 210, 225, and 226 should be positive. In turn, the error generator 227 operates to decrease the voltage on the terminal COMP (FIG. 6 provides a detailed description of this operation), thereby decreasing the duty cycle of the DC/DC converter 230.

By way of example and not limitation, assume there is only an under-voltage condition, e.g., the voltage at the converted voltage output 202 is equal to the voltage reference V_{REF_V}, the voltage V_{IN}' is lower than the voltage reference V_{RBUS_min}, and the input current I_{IN} is equal to the current limit I_{LIM}. Therefore, the error signals 210 and 225 are zero and the error signal 226 is positive. The error generator 227 causes the error signal 226 to go through the pulse modulator 229. Based on the error signal 226, the voltage of the output signal 228 of the error generator 227 (e.g., the voltage on the terminal COMP) decreases, thereby decreasing the duty cycle of the DC/DC converter 230. The error generator 227 is coupled to a compensation network 203 through the terminal COMP and can be used to control the pulse modulator 229 to generate a driving signal, e.g., a pulse-width modulation (PWM) signal to adjust the duty cycle of the DC/DC converter 230.

In some cases, more than one abnormal condition can occur at the same time. By way of example and not limitation, assume there are both an under-voltage condition and an over-current condition, e.g., the voltage at the converted voltage output 202 is equal to the voltage reference V_{REF_V}, the voltage V_{IN}' is lower than the voltage reference V_{RBUS_min}, and the input current I_{IN} exceeds the current limit I_{LIM}. Therefore, the error signal 225 is zero and the error signals 210 and 226 are positive. The error generator 227 sums the error signals 210 and 226 and obtains a total error signal. Based on the total error signal, the voltage of the output signal 228 (e.g., the voltage on the terminal COMP) decreases, thereby decreasing the duty cycle of the DC/DC converter 230. In practice operation, since the presence of one error signal lowers the duty cycle and makes the other error signal return to zero quickly, the abnormal conditions overlap only for a short time period.

Advantageously, the power management system 20 employs the dual stage current control loop to control both the input current I_{IN} and the power delivered to the active system 19 and/or the battery 18. Furthermore, the power converter 22 utilizes the battery voltage control loop and the system priority control loop to ensure normal operation of the active system 19 and the battery 18.

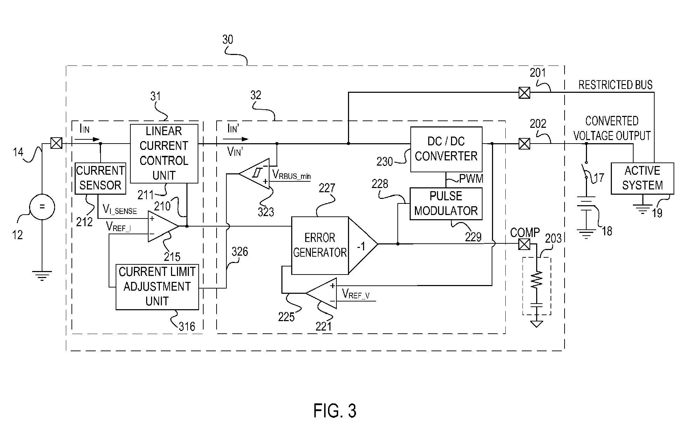

FIG. 3 is a detailed circuit diagram illustrating another example of a power management system 30, in accordance with one embodiment of the present disclosure. FIG. 3 is described in combination with FIG. 2. Elements labeled the same as in FIG. 2 have similar functions.

In the example of FIG. 3, the power converter 32 includes the error amplifier 221, the error generator 227, the pulse modulator 229, and the DC/DC converter 230, which operate similarly as those in FIG. 2. The power converter 32 further includes an error amplifier 323, which operates similarly as the error amplifier 223 in FIG. 2 to form the system priority control loop. The error amplifier 323 compares the voltage V_{IN}' at the restricted bus 201 with the voltage reference V_{RBUS_min} and accordingly generates an error signal 326. A current limit adjustment unit 316 coupled between the error amplifier 215 and the error amplifier 323 receives the error signal 326 and adjusts the voltage reference V_{REF_I} based on the error signal 326. More specifically, if there is an under-voltage condition (e.g., the voltage V_{IN}' at the restricted bus 201 is lower than the voltage reference V_{RBUS_min}), the error signal 326 becomes positive. Then, the current limit adjustment unit 316 reduces the voltage reference V_{REF_I}, which is indicative of a reduced current limit I_{LIM}'. In turn, the input current I_{IN} exceeds the new current limit I_{LIM}' and the error signal 210 becomes positive. The error generator 227 makes the error signal 210 go through the pulse modulator 229. Based on the error signal 210, the voltage on the terminal COMP decreases, thereby decreasing the duty cycle of the DC/DC converter 230. Accordingly, the power converter 22 reduces or cuts off the charging current of the battery 18. Since the total amount of power provided by the power supply 12 is fixed, power delivered to the battery 18 and the active system 19 is balanced. Due to the charging current reduction of the battery 18, the voltage V_{IN}' delivered to the active system 19 increases to the voltage reference V_{RBUS_min} so as to supply power to the active system 19 properly.

Therefore, by using the system priority control loop built around the error amplifier 323, the active system 19 has a priority to ensure its normal operation. If the active system 19 requires more power, the charging current of the battery 18 is accordingly reduced to meet the demands of the active system 19. If necessary, the battery 18 can stop the charging operation and start to supply power to the active system 19. In this case, the active system 19 can be powered by both the battery 18 and the restricted bus 201.

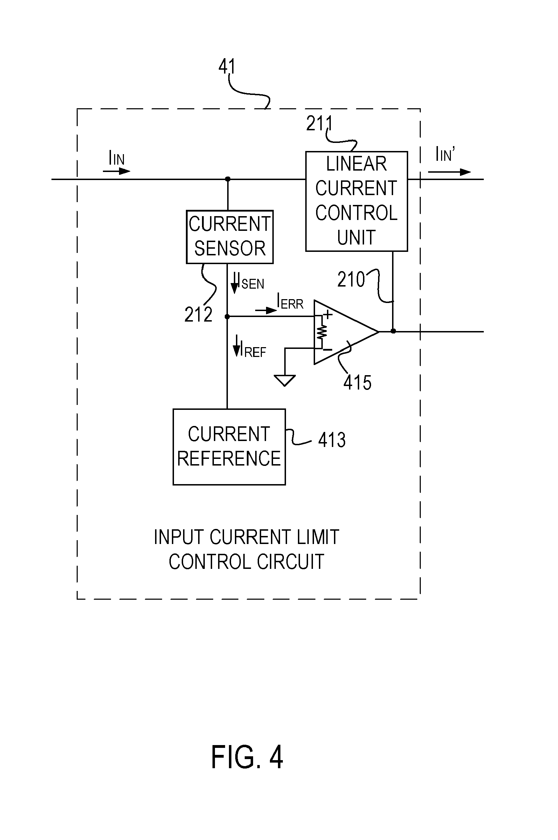

FIG. 4 is a block diagram illustrating another example of an input current limit control circuit 41 that can be used in the system of FIG. 2 or FIG. 3. FIG. 4 is described in combination with FIG. 2 and FIG. 3. Elements labeled the same as in FIG. 2 and FIG. 3 have similar functions. The current sensor 212 senses the input current I_{IN} and generates a sensing signal I_{SEN}, which has a waveform similar to the waveform of the input current I_{IN} but is smaller in magnitude. A current reference 413 coupled to the current sensor 212 provides a current limit I_{REF}. The current reference 413 can be preset by a controller (not shown) according to different application requirements. As shown in FIG. 4, an error signal I_{ERR} is generated based on the sensing signal I_{SEN} and the current limit I_{REF} (e.g., I_{ERR} = I_{SEN} - I_{REF}). A current error amplifier 415 compares the error signal I_{ERR} and ground, and generates the error signal 210 indicative of the difference between the input current I_{IN} and the current limit I_{REF}. The linear current control unit 211 selectively clamps the input current I_{IN} to the clamped current I_{IN}' based on the error signal 210. The error signal 210 is also applied to the power converter 22 (not shown in FIG. 4) to adjust the output voltage and power the load properly.

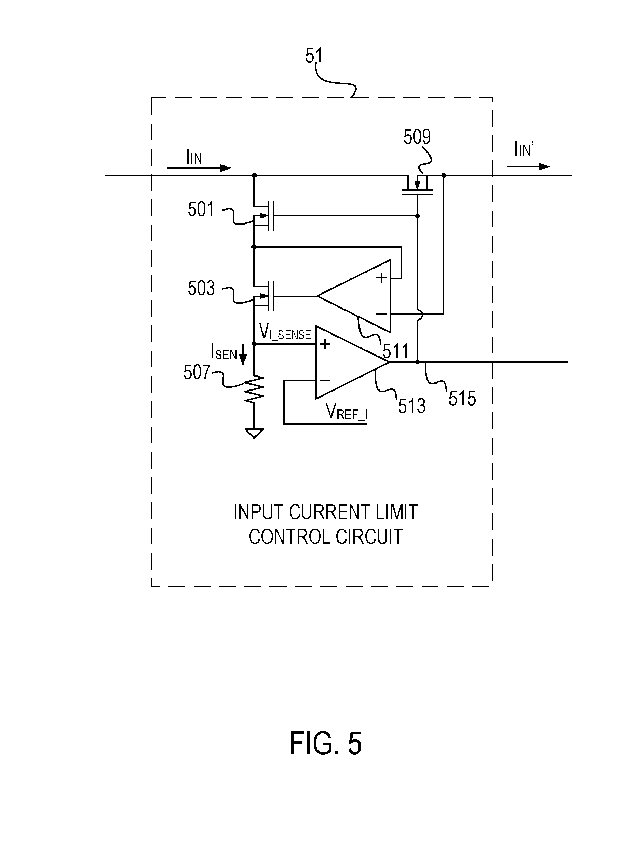

FIG. 5 is a block diagram illustrating yet another example of an input current limit control circuit 51 that can be used in the system of FIG. 2 or FIG. 3. FIG. 5 is described in combination with FIG. 2 and FIG. 3. Elements labeled the same as in FIG. 2 and FIG. 3 have similar functions. The input current limit control circuit 51 includes a resistor 507, an amplifier 511, an error amplifier 513, and three transistors 501, 503, and 509. In the example of FIG. 5, the transistors 501, 503, and 509 can be an N channel metal oxide semiconductor field effect transistor (NMOSFET). The transistor 501 and the transistor 509 have essentially the same drain-to-source voltage and they essentially match each other (any differences are insignificant). The transistor 501, the transistor 503, the transistor 509, and the amplifier 511 together form a current mirror, which receives the input current I_{IN} and outputs a sensing signal I_{SEN} at the source of the transistor 503. The sensing signal I_{SEN} has a waveform similar to the waveform of the input current I_{IN} but is smaller in magnitude, which produces a voltage V_{I_SENSE} across the resistor 507. The error amplifier 513 compares the sensing signal V_{I_SENSE} indicative of the input current I_{IN} with a voltage reference V_{REF_I} indicative of the predetermined current limit I_{LIM} and accordingly generates an error signal 515. The error signal 515 is sent to the transistor 509, which can function as a linear current control unit, to selectively clamp the input current I_{IN} to the clamped current I_{IN}'. The error signal 515 is also applied to the power converter 22 (not shown in FIG. 5) to adjust the output voltage and power the load properly.

FIG. 6 is a block diagram illustrating an example of an error generator 227 that can be used in the system of FIG. 2 or FIG. 3. By way of example and not limitation, FIG. 6 is described in combination with FIG. 2. Elements labeled the same as in FIG. 2 have similar functions. The error generator 227 receives the error signal 210 from the error amplifier 215 (not shown in FIG. 6), the error signal 225 from the error amplifier 221 (not shown in FIG. 6), and the error signal 226 from the error amplifier 223 (not shown in FIG. 6). The error signals 210, 225, and 226 are applied to the gates of transistors 603, 605, and 607 respectively. The drains of the transistors 603, 605, and 607 are coupled together between the terminal COMP and a current generator 601. More specifically, as mentioned above, if the power management system 20 (not shown in FIG. 6) is operating in a normal working condition, the error signals 210, 225, and 226 are zero and the voltage on the terminal COMP (e.g., the voltage of an output signal 228) is its maximum value. However, if there is an over-current condition, an over-voltage condition or an under-voltage condition, one of the error signals 210, 225, and 226 will be positive and will act to sink current from the current generator 601. Therefore, the error generator 227 decreases the voltage on the terminal COMP so as to decrease the duty cycle of the DC/DC converter 230 (not shown in FIG. 6).

By way of example and not limitation, assume there is only an under-voltage condition, e.g., the voltage at the converted voltage output 202 is equal to the voltage reference V_{REF_V}, the voltage V_{IN}' is lower than the voltage reference V_{RBUS_min}, and the input current I_{IN} is equal to the current limit I_{LIM}. Therefore, the error signal 210 and 225 are zero and the error signal 226 is positive. Accordingly, the transistors 603 and 605 are off and the transistor 607 is on. The error signal 226 acts to sink current from the current generator 601. Therefore, the error generator 227 decreases the voltage on the terminal COMP so as to decrease the duty cycle of the DC/DC converter 230 (not shown in FIG. 6).

In some cases, more than one abnormal condition can occur at the same time. By way of example and not limitation, assume there are both an under-voltage condition and an over-current condition, e.g., the voltage at the converted voltage output 202 is equal to the voltage reference V_{REF_V}, the voltage V_{IN}' is lower than the voltage reference V_{RBUS_min}, and the input current I_{IN} exceeds the current limit I_{LIM}. Therefore, the error signal 225 is zero and the error signals 210 and 226 are positive. Accordingly, the transistor 605 is off and the transistors 603 and 607 are on. Both the error signal 210 and the error signal 226 act to sink current from the current generator 601. Therefore, the error generator 227 decreases the voltage on the terminal COMP. The error generator 227 can sum up the error signals 210 and 226 and obtain a total error signal. Based on the total error signal, the voltage on the terminal COMP decreases, thereby decreasing the duty cycle of the DC/DC converter 230 (not shown in FIG. 6).

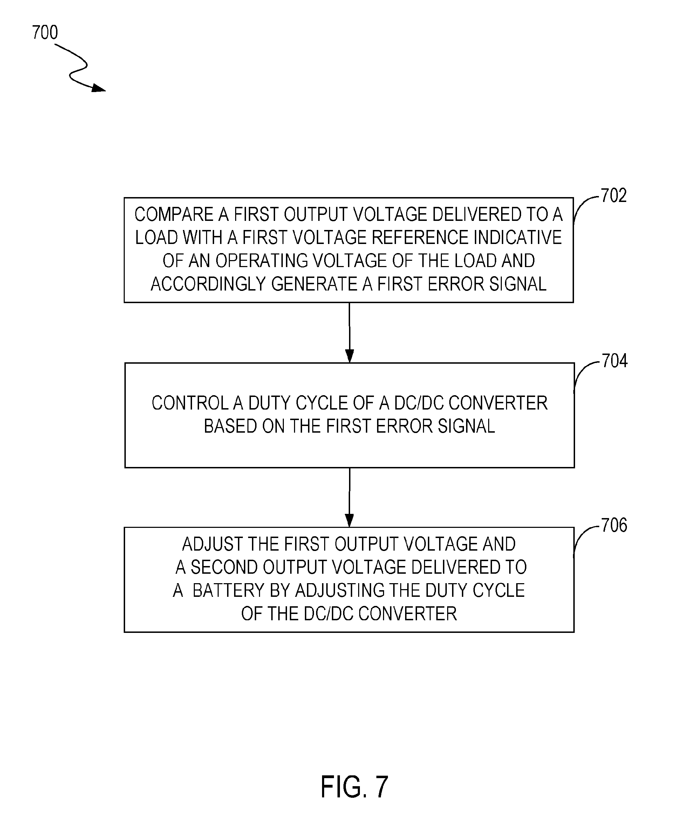

FIG. 7 is a flow chart illustrating an example of a method 700 for controlling system priority in an embodiment according to the present disclosure. It will be described with reference to FIG. 2 and FIG. 3; however, it is not limited to those embodiments.

At block 702, a first output voltage deliver to a load, e.g., the active system 19, is compared with a first voltage reference indicative of an operating voltage of the load. Accordingly, a first error signal, e.g., the error signal 226 or 326, is generated. More specifically, if a power management system (e.g., the power management system 20) is operating in a normal working condition, then the first error signal is zero (e.g., the first output voltage is equal to the first voltage reference). If there is an under-voltage condition (e.g., the first output voltage is lower than the first voltage reference), the first error signal becomes positive. At block 704, a duty cycle of a DC/DC converter (e.g., the DC/DC converter 230) is controlled based on the first error signal. For example, if the first output voltage is lower than the first voltage reference, the duty cycle of the DC/DC converter is reduced based on the first error signal. Proceeding to block 706, the first output voltage and a second output voltage delivered to a battery, e.g., the battery 18, are adjusted by adjusting the duty cycle of the DC/DC converter.

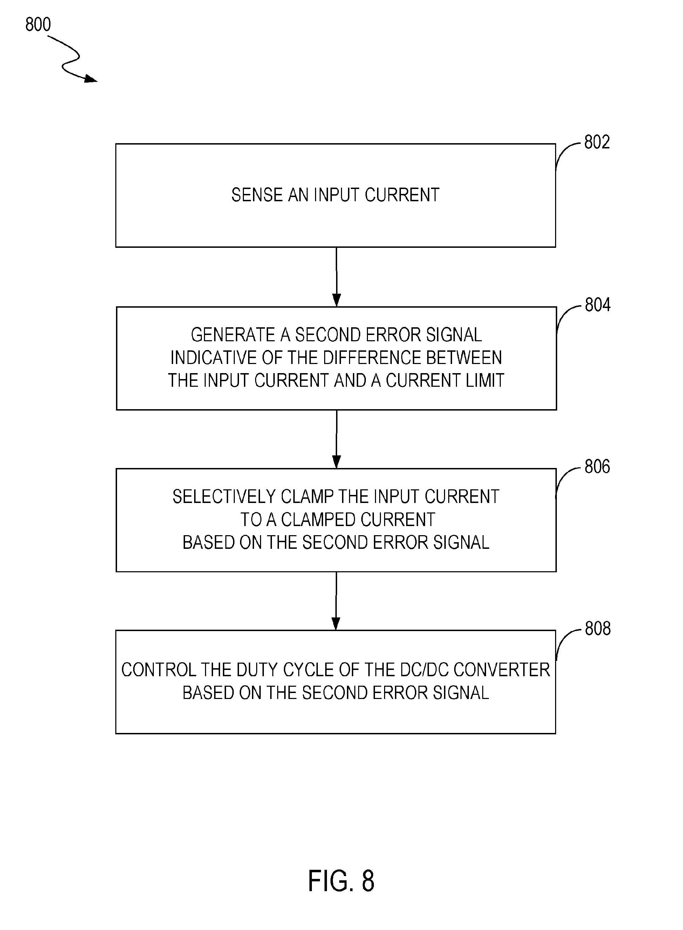

FIG. 8 is a flow chart illustrating an example of a method 800 for controlling input current in an embodiment according to the present disclosure. It will be described with reference to FIG. 2 and FIG. 3; however, it is not limited to those embodiments.

At block 802, an input current, e.g., the input current I_{IN}, is sensed. At block 804, a second error signal, e.g., the error signal 210, is generated, which is indicative of the difference between the input signal and a current limit. More specifically, if a power management system (e.g., the power management system 20) is operating in a normal working condition, then the second error signal is zero (e.g., the input current is equal to the current limit). If there is an over-current condition (e.g., the input current exceeds the current limit), the second error signal becomes positive. In the example of FIG. 2, the current limit can be preset by a controller according to different application requirements. In the example of FIG. 3, the current limit can be adjusted based on the first error signal. For example, if the first output voltage is lower than the first voltage reference, the current limit is reduced based on the first error signal. In turn, the input current exceeds the new current limit and the second error signal becomes positive. At block 806, the input current is selectively clamped to a clamped current based on the second error signal. For example, the input current is clamped to the current limit if the input current exceeds the current limit (e.g., the second error signal becomes positive). Proceeding to block 808, the duty cycle of the DC/DC converter (e.g., the DC/DC converter 230) is controlled based on the second error signal. For example, if the input current exceeds the current limit, the duty cycle of the DC/DC converter is reduced based on the second error signal so as to control the second output voltage.

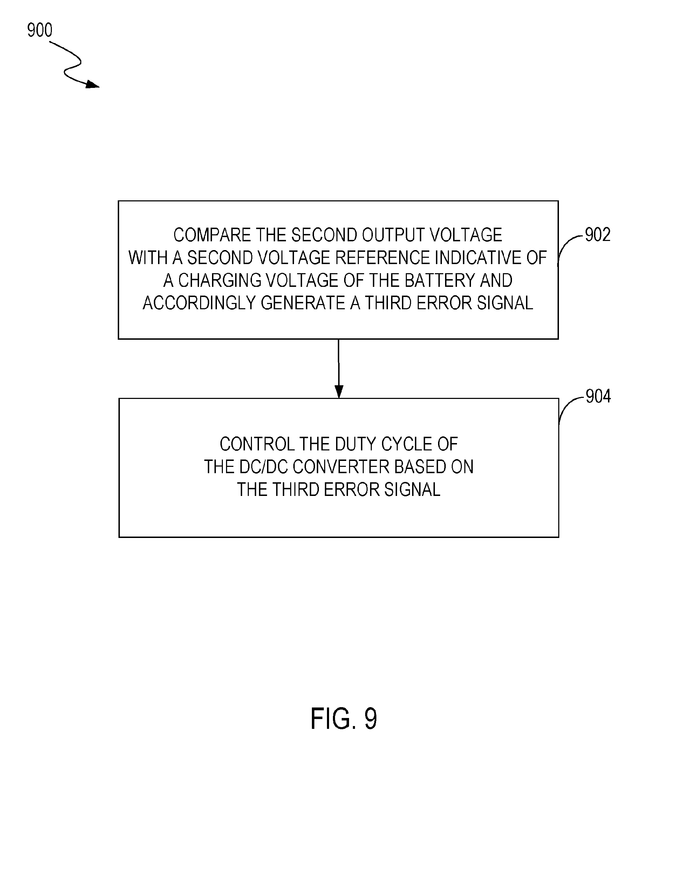

FIG. 9 is a flow chart illustrating an example of a method 900 for controlling the battery voltage in an embodiment according to the present disclosure. It will be described with reference to FIG. 2 and FIG. 3; however, it is not limited to those embodiments.

At block 902, the second output voltage delivered to the battery, e.g., the battery 18, is compared with a second voltage reference indicative of a charging voltage of the battery. Accordingly, a third error signal, e.g., the error signal 225, is generated. More specifically, if a power management system (e.g., the power management system 20) is operating in a normal working condition, then the third error signal is zero (e.g., the second output voltage is equal to the second voltage reference). If there is an over-voltage condition (e.g., the second output voltage exceeds the second voltage reference), the third error signal becomes positive. At block 904, the duty cycle of the DC/DC converter (e.g., the DC/DC converter 230) is controlled based on the third error signal. For example, if the second output voltage exceeds the second voltage reference, the duty cycle of the DC/DC converter is reduced based on the third error signal so that the second output voltage drops to the second voltage reference.

Advantageously, in embodiments according to the present invention, a dual stage current control loop is employed in/by a power management system to control both the input current and the power delivered to the active system and/or the battery. By using a dual stage current control loop, the power management system has an improved transient response and accuracy compared to a system in which each current loop acts separately. Furthermore, in embodiments according to the present invention, a battery voltage control loop and a system priority control loop ensure the normal operation of the active system and the battery. In one embodiment, the system priority control loop built around the error amplifier 223 or 323 compares the voltage delivered to the active system with a minimum system voltage, and accordingly decreases the duty cycle of the DC/DC converter. Therefore, the power management system and method thereof accurately monitor when the active system requires more power to ensure that the active system takes priority by reducing the charging current of the battery.

While the foregoing description and drawings represent embodiments of the present disclosure, it will be understood that various additions, modifications, and substitutions may be made therein without departing from the spirit and scope of the principles of the present disclosure as defined in the accompanying claims. One skilled in the art will appreciate that the present disclosure may be used with many modifications of form, structure, arrangement, proportions, materials, elements, and components and otherwise, used in the practice of the disclosure, which are particularly adapted to specific environments and operative requirements without departing from the principles of the present disclosure. The presently disclosed embodiments are therefore to be considered in all respects as illustrative and not restrictive, the scope of the present disclosure being indicated by the appended claims and their legal equivalents, and not limited to the foregoing description.

## Claims

1. A power management system, comprising:
an error amplifier, operable for comparing a first output voltage delivered to a load with a first voltage reference indicative of an operating voltage of the load and for accordingly generating a first error signal;
a DC/DC converter, coupled to a battery, that is operable for adjusting the first output voltage and a second output voltage delivered to the battery, by adjusting a duty cycle of the DC/DC converter; and
an error generator, coupled between the error amplifier and the DC/DC converter, that is operable for controlling the duty cycle of the DC/DC converter based on the first error signal,
wherein if the first output voltage is lower than the first voltage reference, the error generator reduces the duty cycle of the DC/DC converter and a charging current of the battery based on the first error signal so that the first output voltage increases to the first voltage reference.

2. The power management system of claim 1, further comprising:
an input current limit control circuit, coupled to the error generator, that is operable for sensing an input current, generating a second error signal indicative of the difference between the input current and a current limit, and clamping the input current to a clamped current based on the second error signal,
wherein the error generator further controls the duty cycle of the DC/DC converter based on the second error signal, and wherein if the input current exceeds the current limit, the error generator reduces the duty cycle of the DC/DC converter based on the second error signal to control the second output voltage.

3. The power management system of claim 2, wherein the current limit is preset by a controller according to an application requirement of the power management system.

4. The power management system of claim 2 or 3, wherein if the first output voltage is lower than the first voltage reference, the input current limit control circuit reduces the current limit based on the first error signal.

5. The power management system of claim 2, 3 or 4 wherein the input current limit control circuit is connectable to a power supply, wherein the power supply is a Universal Serial Bus port power supply and wherein the load is an active system.

6. The power management system of one of claims 1 to 5, further comprising:
a battery voltage control loop, operable for comparing the second output voltage with a second voltage reference indicative of a charging voltage of the battery and for accordingly generating a third error signal,
wherein the error generator further controls the duty cycle of the DC/DC converter based on the third error signal, and wherein if the second output voltage exceeds the second voltage reference, the error generator reduces the duty cycle of the DC/DC converter based on the third error signal so that the second output voltage drops to the second voltage reference.

7. The power management system of claim 6, wherein a D/A converter coupled to an error amplifier of the battery voltage control loop is operable for converting the second voltage reference from digital form into an analog signal for comparison at the battery voltage control loop.

8. The power management system of one of claims 1 to 7, wherein a D/A converter coupled to the error amplifier is operable for converting the first voltage reference from digital form into an analog signal for comparison at the power management system.

9. The power management system of one of claims 1 to 8, wherein the power management system further comprises a pulse modulator coupled between the error generator and the DC/DC converter, and wherein the pulse modulator is operable for generating a driving signal to adjust the duty cycle of the DC/DC converter according to an output signal received from the error generator.

10. The power management system of claim 9, wherein the driving signal is a pulse-width modulation signal.

11. The power management system of one of claims 1 to 10, wherein the error generator is further coupled to a compensation network through a compensation terminal, and wherein the error generator decreases a voltage on the compensation terminal to decrease the duty cycle of the DC/DC converter.

12. The power management system of claim 11, wherein the error generator comprises a first switch controlled by the first error signal, wherein a drain of the first switch is coupled between the compensation terminal and a current generator, wherein if the first output voltage is lower than the first voltage reference, the first error signal sinks current from the current generator so as to decreases the voltage on the compensation terminal.

13. A power management method, comprising:
comparing a first output voltage delivered to a load, with a first voltage reference indicative of an operating voltage of the load and accordingly generating a first error signal;
controlling a duty cycle of a DC/DC converter based on the first error signal; and
adjusting the first output voltage and a second output voltage delivered to a battery, by adjusting the duty cycle of the DC/DC converter,
wherein if the first output voltage is lower than the first voltage reference, the duty cycle of the DC/DC converter and a charging current of the battery are reduced based on the first error signal so that the first output voltage increases to the first voltage reference.

14. The power management method of claim 13, further comprising:
sensing an input current;
generating a second error signal indicative of the difference between the input current and a current limit;
clamping the input current to a clamped current based on the second error signal; and
controlling the duty cycle of the DC/DC converter based on the second error signal,
wherein if the input current exceeds the current limit, the duty cycle of the DC/DC converter is reduced based on the second error signal to control the second output voltage.

15. The power management method of claim 14, wherein the current limit is preset by a controller.

16. The power management method of claim 14 or 15, wherein if the first output voltage is lower than the first voltage reference, the current limit is reduced based on the first error signal.

17. The power management method of one of claims 13 to 16, further comprising:
comparing the second output voltage with a second voltage reference indicative of a charging voltage of the battery and for accordingly generating a third error signal; and
controlling the duty cycle of the DC/DC converter based on the third error signal,
wherein if the second output voltage exceeds the second voltage reference, the duty cycle of the DC/DC converter is reduced based on the third error signal so that the second output voltage drops to the second voltage reference.

18. The power management method of claim 17, wherein the step of comparing the second output voltage with the second voltage reference further comprises:
converting the second voltage reference from digital form into an analog signal.

19. The power management method of one of claims 13 to 18, wherein the step of comparing the first output voltage with the first voltage reference further comprises:
converting the first voltage reference from digital form into an analog signal.

20. The power management method of one of claims 13 to 19, wherein the duty cycle of the DC/DC converter is reduced by decreasing a voltage on a compensation terminal.
